# EUROPEAN PATENT APPLICATION

(11) **EP 4 161 213 A1**
(43) Date of publication of application: **05.04.2023**
(21) Application number: 22194725.2
(22) Date of filing: 08.09.2022
(51) Int. Cl.: H05B 3/42, B29C 65/18

(54) **DIE**

(30) Priority: 30.09.2021 JP 2021161156
(71) Applicant: OMRON Corporation, Kyoto 600-8530 (JP)
(72) Inventor: YAMADA, Takaaki, Kyoto, 600-8530 (JP); UEDA, Norihiro, Kyoto, 600-8530 (JP); NISHIDE, Miho, Kyoto, 600-8530 (JP)
(74) Representative: HGF

(57) **Abstract**

A die (10) includes: a die main body (20) including a heating surface (21); and a heater (30) partially housed inside the die main body (20), the heater (30) being capable of heating the heating surface (21). The heater (30) includes a housing unit (31) having a rod-shape, the housing unit (31) including a heating wire portion (32) inside which a heating wire is housed and a non-heating wire portion (33) inside which no heating wire is housed. One end portion of the housing unit (31) in a direction in which the housing unit (31) extends is positioned outside the die main body (20), and the non-heating wire portion (33) is disposed at the one end portion.

## Description

### Technical Field

The present invention relates to a die including a heater.

### Description of the Related Art

Patent Literature 1 discloses a seal bar including a rod-shaped main body having a sealing surface and a rod-shaped heater provided inside the main body.

### Citation List

### Patent Literature

Patent Literature 1: JP 2018-103995 A

### Summary

The heater may have a region in which no heating wire is housed at an end in a direction in which the heater extends. In this case, in the seal bar of Patent Literature 1, a temperature of the sealing surface facing the region where no heating wire of the heater is housed is lower than a temperature of the sealing surface facing the region where the heating wire of the heater is housed, and a temperature distribution of the sealing surface may not be uniform.

An object of the present disclosure is to provide a die capable of making temperature distribution on a heating surface uniform.

A die according to an aspect of the present disclosure includes:
a die main body having a heating surface; and
a heater partially housed inside the die main body, the heater configured to heat the heating surface, wherein
the heater includes a housing unit having a rod-shape, the housing unit including a heating wire portion inside which a heating wire is housed and a non-heating wire portion inside which no heating wire is housed,
one end portion in a direction in which the housing unit extends is positioned outside the die main body, and
the non-heating wire portion is disposed at the one end portion.

According to the die of the above aspect, it is possible to achieve a die capable of making the temperature distribution of the heating surface uniform.

### Brief Description of Drawings

Fig. 1 is a perspective view showing a machining apparatus including a die according to an embodiment of the present disclosure.
Fig. 2 is a plan view showing a die according to an embodiment of the present disclosure.
Fig. 3 is a plan view showing a first modification of the die in Fig. 2.
Fig. 4 is a plan view showing a second modification of the die in Fig. 2.
Fig. 5 is a plan view of a first example of a die to which the present disclosure is applied as viewed along a short direction.
Fig. 6 is a plan view of a second example of a die to which the present disclosure is applied as viewed along a short direction.
Fig. 7 is a plan view of an example of a conventional die as viewed along a short direction.
Fig. 8 is a plan view of the dies in Figs. 5 to 7 as viewed along the longitudinal direction.
Fig. 9 is a graph showing a relationship between a position and a temperature on the heating surface of the dies in Figs. 5 to 7.

### Description of Embodiments

Hereinafter, an example of the present disclosure will be described with reference to the accompanying drawings. It should be noted that in the following description, terms indicating specific directions or positions (for example, terms including "upper", "lower", "right", and "left") are used as necessary, but using these terms is to facilitate understanding of the present disclosure with reference to the drawings, and the technical scope of the present disclosure is not limited by the meaning of the terms. In addition, the following description is, essentially, merely illustrative and is not intended to limit the present disclosure, applied products thereof, or applications thereof. Furthermore, the drawings are schematic, and ratios and the like of the respective dimensions do not necessarily match those of actual ones.

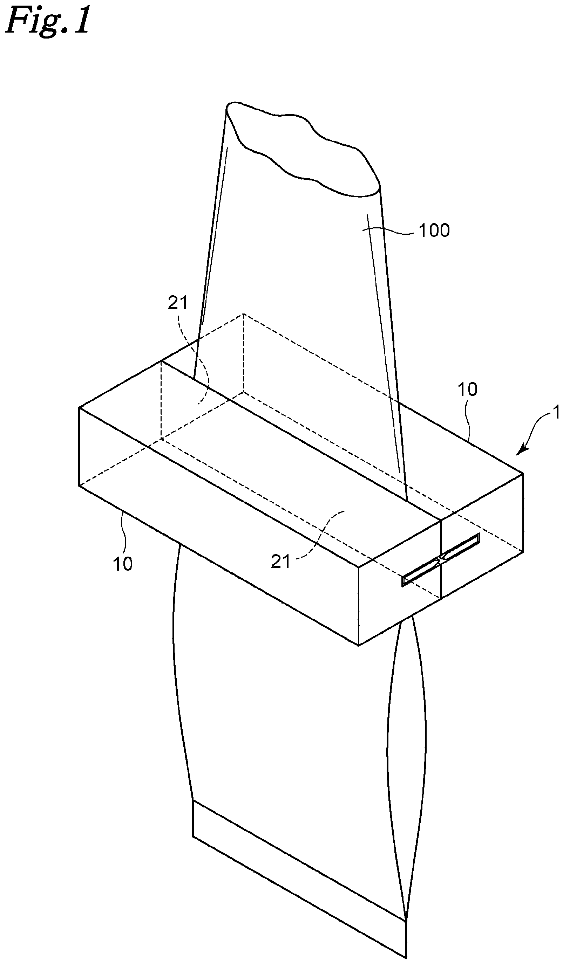

The die 10 of an embodiment of the present disclosure constitutes a part of a machining apparatus 1, for example, as shown in Fig. 1. The machining apparatus 1 is, for example, a thermal sealing apparatus that forms a package by thermocompression bonding the packaging material 100, and includes a pair of dies 10. Each die 10 includes a heating surface 21, and is disposed so that the heating surfaces 21 face each other.

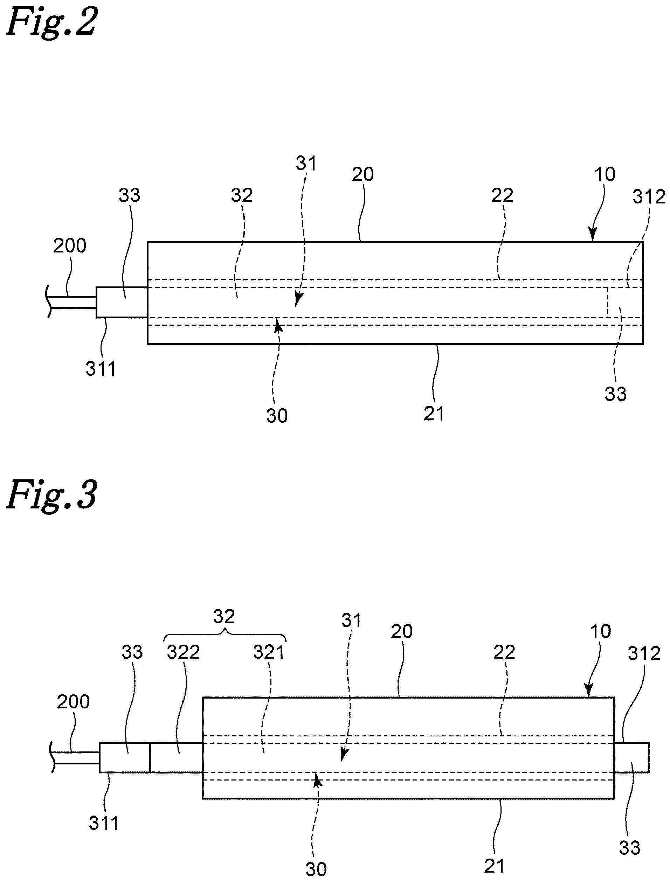

As shown in Fig. 2, each die 10 includes a die main body 20 including a heating surface 21 and a heater 30 configured to be able to heat the heating surface 21. A part of the heater 30 is housed inside the die main body 20.

As an example, the die main body 20 is formed of a substantially rectangular parallelepiped-shaped member having heat transfer performance, and one of outer surfaces thereof constitutes the heating surface 21. In the present embodiment, the die main body 20 includes a hole 22 that opens at one end in the longitudinal direction thereof. The hole 22 extends in the longitudinal direction of the die main body 20 and is configured to be able to house the heater 30.

The heater 30 includes, for example, a sheath heater or a cartridge heater. The heater 30 includes a rod-shaped housing unit 31. The housing unit 31 is made of, for example, stainless steel, and one end portion (hereinafter, referred to as a first end portion 311) in the direction in which the housing unit 31 extends is positioned outside the die main body 20. In the present embodiment, the housing unit 31 has a substantially linear shape, is housed in the hole 22 of the die main body 20, and faces the heating surface 21 in a direction intersecting the heating surface 21 (for example, the vertical direction in Fig. 2). In addition, a wiring line 200 is connected to the first end portion 311 of the housing unit 31.

The housing unit 31 includes a heating wire portion 32 inside which the heating wire is housed and a non-heating wire portion 33 inside which no heating wire is housed. In the present embodiment, in the housing unit 31, respective non-heating wire portions 33 are arranged at both ends in the direction in which the housing unit 31 extends. The non-heating wire portion 33 disposed at the other end portion (hereinafter, referred to as a second end portion 312) of the housing unit 31 on the opposite side of the first end portion 311 in the direction in which the housing unit 31 extends is positioned inside the die main body 20.

The die 10 can exhibit the following effects.

The die 10 includes a die main body 20 including a heating surface 21 and a heater 30 partially housed inside the die main body 20 and capable of heating the heating surface 21. The heater 30 includes a rod-shaped housing unit 31 including a heating wire portion 32 inside which a heating wire is housed and a non-heating wire portion 33 inside which no heating wire is housed. One end portion of the housing unit 31 in the direction in which the housing unit 31 extends is positioned outside the die main body 20, and the non-heating wire portion 33 is disposed at one end portion in the direction in which the housing unit 31 extends of the housing unit 31. With this configuration, since it is possible to reduce a region of the heating surface 21 facing the non-heating wire portion 33 of the heater 30, it is possible to achieve a die 10 capable of making a temperature distribution of the heating surface 21 uniform.

The wiring line 200 is connected to one end portion in a direction in which the housing unit 31 extends of the housing unit 31. With this configuration, it is possible to suppress influence of heat dissipation from the wiring line 200 received by the heater 30.

The die main body 20 includes a hole 22 that houses the heater 30. With this configuration, the heater 30 can be easily housed in the die main body 20.

The heater 30 is a sheath heater or a cartridge heater. With this configuration, it is possible to achieve the die 10 capable of making a temperature distribution of the heating surface 21 uniform with a simple configuration.

The die 10 can also be configured as follows.

The die main body 20 may adopt any configuration having the heating surface 21 and capable of housing a part of the heater 30. For example, the hole 22 for housing the heater 30 may be omitted or may be replaced with a groove capable of housing the heater 30.

The heater 30 is not limited to the sheath heater or the cartridge heater, and other heaters may be used.

Not limited to the case where the wiring line 200 is connected to the first end portion 311 of the housing unit 31, the wiring line 200 may be connected to the second end portion 312.

As shown in Fig. 3, the die 10 may be configured so that the second end portion 312 of the housing unit 31 is positioned outside the die main body 20. With this configuration, it is possible to more reliably reduce a region of the heating surface 21 facing the non-heating wire portion 33 of the heater 30.

As shown in Fig. 3, the die 10 may be configured so that the heating wire portion 32 of the housing unit 31 includes a first portion 321 and a second portion 322, and the second portion 322 of the heating wire portion 32 is positioned outside the die main body 20. The second portion 322 is disposed adjacent to the non-heating wire portion 33, and has a heating wire density lower than that of the first portion 321 (for example, about 50% of a heating wire density of the first portion 321). With this configuration, since it is possible to face only the first portion 321 of the heating wire portion 32 to the heating surface 21, a die 10 capable of more reliably making the temperature distribution of the heating surface 21 uniform can be achieved.

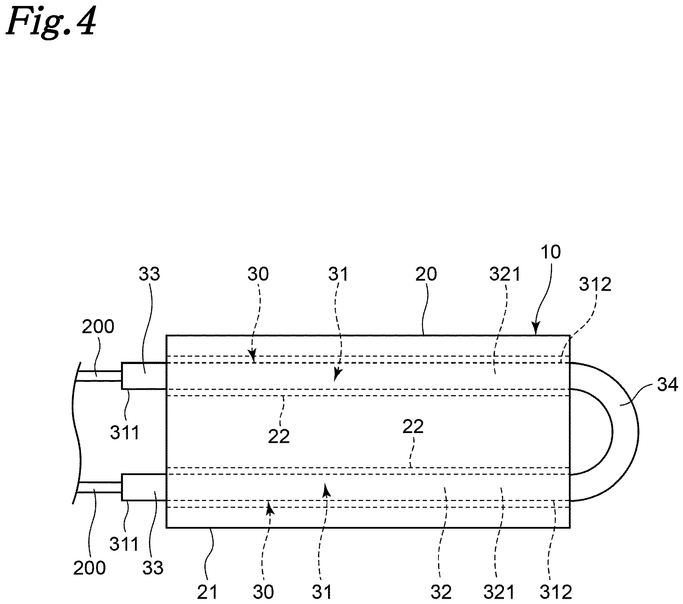

The housing unit 31 is not limited to have a substantially linear shape, and may have a substantially U-shape as shown in Fig. 4. In the die 10 in Fig. 4, the die main body 20 includes two holes 22 arranged at intervals in a short direction (for example, vertical direction in Fig. 4) of the heating surface 21. The heater 30 includes two housing units 31 and a curved housing unit 34 connected to the second end portions 312 of the two housing units 31. The housing unit 34 has a heating wire density smaller than that of the housing unit 31 (for example, about 50% of a heating wire density of the first portion 321), and is positioned outside the die main body 20. As described above, since a die of the present disclosure can use heaters having various shapes, a degree of freedom of design is high.

As described above, various embodiments of the present disclosure have been described in detail with reference to the drawings. Lastly, various aspects of the present disclosure will be described. It should be noted that in the following description, as an example, reference numerals are also added.

A die 10 according to a first aspect of the present disclosure includes:
a die main body 20 including a heating surface 21; and
a heater 30 partially housed inside the die main body 20, the heater 30 being capable of heating the heating surface 21, wherein
the heater 30 includes a housing unit 31 having a rod-shape, the housing unit 31 including a heating wire portion 32 inside which a heating wire is housed and a non-heating wire portion 33 inside which no heating wire is housed,
one end portion (first end portion) of the housing unit 31 in a direction in which the housing unit 31 extends is positioned outside the die main body 20, and
the non-heating wire portion 33 is disposed at the one end portion.

In a die 10 according to a second aspect of the present disclosure,
a wiring line 200 is connected to the one end portion of the housing unit 31.

In a die 10 according to a third aspect of the present disclosure,
the other end portion (second end portion) of the housing unit 31 on an opposite side of the one end portion in a direction in which the housing unit 31 extends is positioned outside the die main body 20.

In a die 10 according to a fourth aspect of the present disclosure,
the heating wire portion 32 includes a first portion 321 and a second portion 322 disposed adjacent to the non-heating wire portion 33 and having a heating wire density lower than a heating wire density of the first portion 321, and
the second portion 322 is positioned outside the die main body 20.

In a die 10 according to a fifth aspect of the present disclosure,
the die main body 20 includes a hole 22 or a groove for housing the heater 30.

In a die 10 according to a sixth aspect of the present disclosure,
the heater 30 is a sheath heater or a cartridge heater.

Appropriately combining any embodiment or modification out of the various embodiments or modifications allows the effect of each embodiment or modification to be exhibited. In addition, a combination of embodiments, a combination of examples, or a combination of an embodiment and an example is possible, and a combination of features of different embodiments or examples is also possible.

The present disclosure has been sufficiently described in connection with the preferred embodiments with reference to the accompanying drawings, and various modifications and corrections are apparent for those skilled in the art. It should be understood that as long as such modifications and corrections do not depart from the scope of the present disclosure by the attached claims, they are included therein.

### Examples

Hereinafter, the present disclosure will be described in more detail with reference to examples, but the present disclosure is not limited by the examples at all.

### (Implementation method)

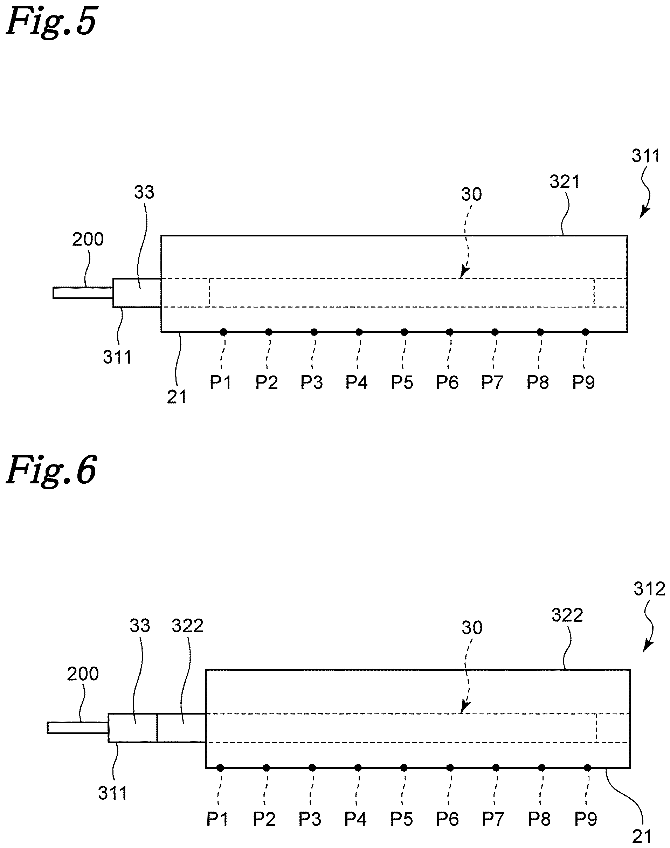

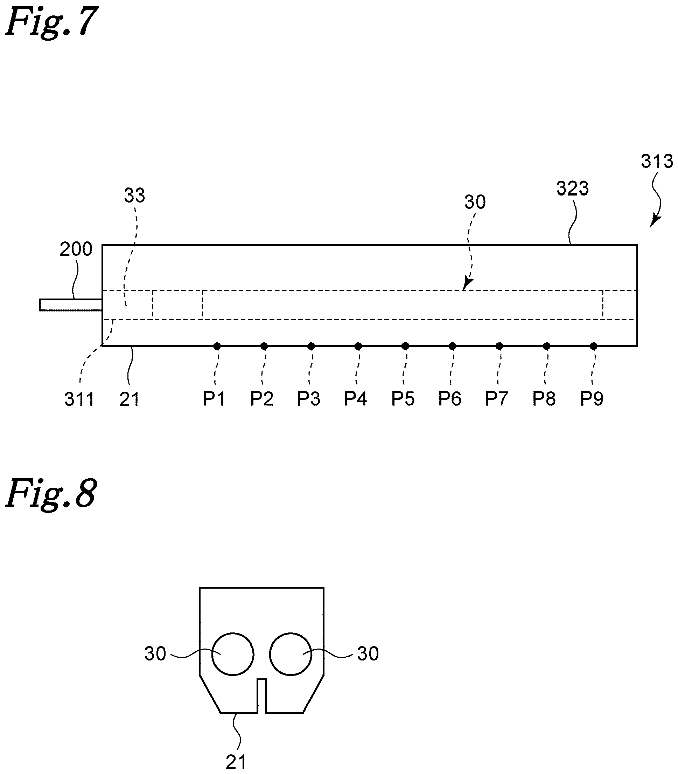

A temperature distribution of the heating surface 21 was measured using the dies 311, 312, and 313 shown in Figs. 5 to 7. The dies 311 and 312 in Figs. 5 and 6 are examples of dies to which the present disclosure is applied, and the die 313 in Fig. 7 is an example of a conventional die.

### (Die)

The dies 311, 312, and 313 shown in Figs. 5 to 7 were used. The dies 311, 312, and 313 are made of steel. Each of the dies 311, 312, and 313 includes a die main body 321, 322, and 323, the die main bodies 321, 322, and 323 having substantially the same cross-sectional shape, and two heaters 30 (see Fig. 8) housed in the die main body 321, 322, and 323. Each heater 30 includes a cartridge heater of 200 W. In the die 311 in Fig. 5, the heater 30 is housed in the die main body 321 in a state where the non-heating wire portion 33 on the first end portion 311 side is exposed to the outside. In the die 312 in Fig. 6, the heater 30 is housed in the die main body 322 in a state where the non-heating wire portion 33 on the first end portion 311 side and the second portion 322 of the heating wire portion 32 are exposed to the outside. In the die 313 in Fig. 7, the heater 30 is entirely housed in the die main body 323. The die main bodies 321, 322, and 323 have the same shape and dimension except for a dimension in the longitudinal direction thereof.

### (Implementation conditions)

In a state where an ambient temperature was 25°C, temperatures at 9 places indicated by P1 to P9 on the heating surface 21 were measured by a temperature sensor. A thermocouple was used as the temperature sensor. A target temperature of the temperature sensor at P5 was set to 140°C, and the heater 30 was PID-controlled.

### (Results)

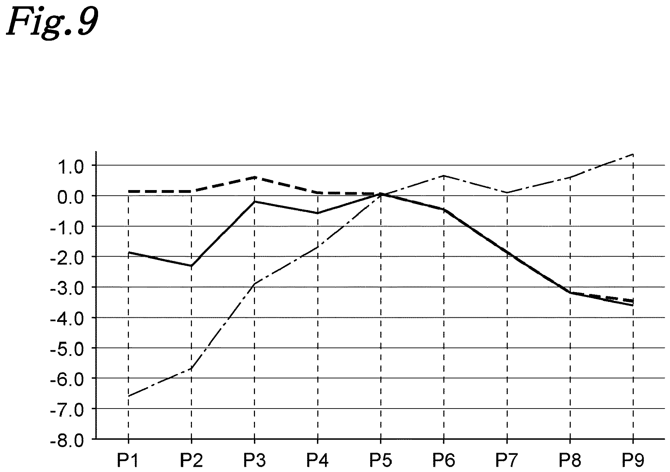

Fig. 9 shows the measurement results. The vertical axis in Fig. 9 represents the temperature (°C) when the temperature measured at P5 on the heating surface 21 is 0.0, and the horizontal axis in Fig. 9 represents a place where the temperature of the heating surface 21 is measured. In Fig. 9, a temperature of the heating surface 21 of the die 311 in Fig. 5 is indicated by a solid line, a temperature of the heating surface 21 of the die 312 in Fig. 6 is indicated by a broken line, and a temperature of the heating surface 21 of the die 313 in Fig. 7 is indicated by a one-dot chain line.

In the dies 311 and 312 of the present disclosure, it has been found that the uniformity of the temperature distribution is slightly lower at P6 to P9 on the heating surface 21 than that in the conventional die 313, but the uniformity of the temperature distribution is higher at P1 to P4 on the heating surface 21 than that in the conventional die 313, and the temperature distribution of the heating surface 21 is more uniform as a whole than that in the conventional die 313. In addition, it has been found that, in the die 312 in Fig. 6, the uniformity of the temperature distribution at P1 to P5 is very high, and the temperature distribution on the heating surface 21 is the most uniform as a whole. That is, it has been found that the temperature distribution of the heating surface 21 can be more reliably made uniform by configuring the die so that not only the non-heating wire portion 33 but also the second portion 322 of the heating wire portion 32 is positioned outside the die main body.

A die of the present disclosure can be applied not only to an electric heater but also to a heater including an electric heating body that generates heat by resistance heating such as a fuse, a conducting wire, and a power transmission line.

### Reference Signs List

- 1: machining apparatus
- 10: die
- 20: die main body
- 21: heating surface
- 22: hole
- 30: heater
- 31: housing unit
- 311: first end portion
- 312: second end portion
- 32: heating wire portion
- 321: first portion
- 322: second portion
- 33: non-heating wire portion
- 34: housing unit
- 100: packaging material
- 200: wiring line

## Claims

1. A die (10), **characterized by** comprising:
a die main body (20) including a heating surface (21); and
a heater (30) partially housed inside the die main body (20), the heater (30) being capable of heating the heating surface (21), wherein
the heater (30) includes a housing unit (31) having a rod-shape, the housing unit (31) including a heating wire portion (32) inside which a heating wire is housed and a non-heating wire portion (33) inside which no heating wire is housed,
one end portion of the housing unit (31) in a direction in which the housing unit (31) extends is positioned outside the die main body (20), and
the non-heating wire portion (33) is disposed at the one end portion.

2. The die (10) according to claim 1, wherein
a wiring line is connected to the one end portion of the housing unit (31).

3. The die (10) according to claim 1 or 2, wherein
the other end portion of the housing unit (31) on an opposite side of the one end portion in a direction in which the housing unit (31) extends is positioned outside the die main body (20).

4. The die (10) according to any one of claims 1 to 3, wherein
the heating wire portion (32) includes a first portion (321) and a second portion (322) disposed adjacent to the non-heating wire portion (33) and having a heating wire density lower than a heating wire density of the first portion (321), and
the second portion (322) is positioned outside the die main body (20).

5. The die (10) according to any one of claims 1 to 4, wherein
the die main body (20) includes a hole (22) or a groove for housing the heater (30).

6. The die (10) according to any one of claims 1 to 5, wherein
the heater (30) is a sheath heater or a cartridge heater.
